# EUROPEAN PATENT SPECIFICATION

(11) **EP 1 606 991 B1**
(45) Date of publication and mention of the grant of the patent: **03.10.2007**
(21) Application number: 05253507.7
(22) Date of filing: 08.06.2005
(51) Int. Cl.: A01F 15/07

(54) **Bale wrapping apparatus**
Ballenumhüllungvorrichtung
Appareil d'enrubannage de balles

(30) Priority: 16.06.2004 GB 0413459
(43) Date of publication of application: 21.12.2005
(73) Proprietor: Kverneland ASA, 4355 Kvernaland (NO)
(72) Inventor: Wondergem, M.J., 4388 VS Oost-Souburg (NL); Lunasmo, Jo Vegar, 4340 Bryne (NO)
(74) Representative: Raynor, Simon Mark

(56) References cited:
- EP-A- 1 050 207
- WO-A-98/34463
- CA-A1- 2 270 146
- US-A1- 2003 070 392

## Description

This invention relates to a bale wrapping apparatus for applying film wrapping to a bale of agricultural crop material, such bale having a generally longitudinally axis (see e.g. EP-A-1050207).

A bale having a generally longitudinally axis includes a cylindrical bale of circular cross section (usually referred to as a "round" bale), or a bale of parallelopiped shape (usually referred to as a "square" bale). The bale wrapping apparatus of the invention is capable of applying film wrapping to square bales and round bales, or indeed other bales having a generally longitudinal axis. Common to all of these bales will be the following three parameters:
first of all, each bale has a general longitudinal axis of symmetry;
secondly, the bale will have a pair of planar opposed end faces; and
thirdly, there will be an outer surface which extends between the planar end faces and which is of parallelopiped or circular cross-section.

It is now common practice to preserve bales of agricultural crop material by applying film wrapping to the outer surface of the bale in order to exclude the contents from contact with air, or water. Dried hay or straw can be wrapped, to preserve the contents from damage, but a particular major usage is in the wrapping of bales of partly dried grass which, on wrapping, mature or ferment within the enclosure provided by the wrapping to form silage. Typically, compressed bales of grass are formed into cylindrical shapes (round bales) or into parallelopiped shapes (square bales). The sealing of the bale contents is done by forming an airtight (and watertight) barrier around the outer surfaces of the bales i.e. the plane or opposed end faces, and also the outer surfaces extending between the end faces.

It is already known to form a sealed barrier around the outer surface of a compressed bale by using a plastics bag into which the bale is placed, and then closing up the open end of the bag so as to make it substantially airtight. One disadvantage of this way of making the bale airtight is the fact that the wall of the bag is not tightly wrapped around the bale, and there is much internal airspace between the wall of the bag and the outer surface of the bale. In the case of damage being done to the wall of the bag, e.g. by birds pecking through the wall, air can penetrate into the bale, and by reason of the relatively loose packing of the bale within the bag, such air can migrate easily between the wall of the bag and the whole outer surface of the bale. Therefore, the entire surface of the bale will become exposed to external air, and the bale will deteriorate over its entire surface, and when this happens, the entire contents of the bale can be considered as potentially damaged and not be usable at all.

Another way to form a substantially sealed barrier around a bale is to apply successive overlapping strips of pre-stretched plastics film. It is now well known practice to use "rotating table" types of bale wrappers, and also so-called "orbiting satellite" types of bale wrappers, and which will be well known to those of ordinary skill in the art, and not need to be disclosed in more detail herein.

One advantage of application of overlapping strips of pre-stretched plastics film is that the film is applied tightly to the outer surface of the bale, and therefore if there is any local penetration of the film wrapping, it will be unlikely to permeate the remainder of the bale from the local damaged area of the wrapping at which local damage only may be done to the bale at its outer surface. Thus, locally the bale may deteriorate, but such deterioration may lock-off the damaged area from further air ingress to the bale. Therefore, only a small part of the content of the bale may suffer deterioration and not be usable as animal feed.

A disadvantage of use of pre-stretched plastics film is that it cannot always be guaranteed that the overlapping windings of film will always be entirely airtight, and especially when wrapping square bales. Therefore, to minimise the risk of sufficient lack of airtightness, it is usual to apply several layers of overlapping windings of film onto the outer surface of the bale, to reduce the risk of air leakage between successive overlapping windings to minimum. In the wrapping of round bales, it is usual in practice to apply as many as six layers of overlapping windings of film. On square or parallelopiped bales, six or eight layers of films are often employed.

Particularly in the case of pre-stretched film wrapping applied to the outer surfaces of parallelopiped bales, there can be a problem that an insufficiently airtight overlap is not obtained, by reason of the shape of the bale, which results in variable tension in the strips of film, particularly as the film windings are wrapped partly over the eight corners of the parallelopiped shape. Also, another disadvantage of existing rotating table, and orbiting satellite wrappers is the need to rotate (heavy) bales during wrapping, and which is a particular problem with square bales.

The present invention therefore seeks to provide an improved apparatus for wrapping bales of agricultural crop material which have a generally longitudinal axis, with a formation of a more reliable airtight barrier having less risk for air leakage, while still fitting tightly onto the exposed outer surface of the bale. It is also the intention to provide apparatus which can function quickly, and may be combined as an integrated combination with an existing design of "square baler" relatively easily.

According to one aspect of the invention there is provided apparatus for wrapping successive bales of agricultural crop material, in which each bale has (i) a generally longitudinal axis, (ii) a pair of planar opposed end faces, and (iii) an outer surface which extends between said planar end faces and which is of parallelopiped or circular cross-section and said apparatus comprising:
a table for supporting bales applied successively thereto;
a first dispenser through which a first bale on the table is relatively moveable in a direction parallel to its longitudinal axis, said dispenser being operative to dispense a strip of plastics film wrapping to form axially overlapping windings on the outer surface of the bale; and
means for applying relative movement between the said first bale and the dispenser in said direction parallel to the longitudinal axis of the bale:
characterised in that a second dispenser is arranged to dispense a flexible elongate connecting element in a direction parallel to the axis of a bale, to overlie the outer surface of said first bale and to underlie the overlapping windings applied to the outer surface by said first dispenser, in which the second dispenser is also operative to dispense said flexible elongate connecting element to overlie the outer surface of a next successive bale applied to the table so as to interconnect two successive bales and also function as a former around which said strip of film wrapping can be applied by the first dispenser, prior to forming axially overlapping windings on said next successive bale.

Therefore, in apparatus according to the invention, the second dispenser can dispense any suitable length of flexible elongate connecting element, such as a narrow strip of plastics film, to interconnect two successive bales, of which the first already has film wrapping applied thereto in the form of axially overlapping windings, and a narrow "waist" exists between the wrapped bale and the next successive bale awaiting wrapping; and around such waist the first dispenser is able to continue to apply the strip of film wrapping around the "waist" acting as a former, prior to the first dispenser then applying axially overlapping windings to the next successive bale. Then, upon completion of wrapping of two successive bales, it is a simple matter to separate the two wrapped bales by cutting the "waist" between the two bales.

Preferably, the first dispenser comprises two circumferentially spaced film reel holders, each capable of dispensing a separate strip of plastics film. The film reel holders may be axially spaced from each other which respect to the axis of the bale. The strips underlie the overlaps of the first dispenser so minimizing the risk of leakage.

Conveniently, the film reel holders of the first dispenser are arranged to dispense respective windings which overlap axially by up to 50% of the width of each winding, to reduce the risk of any leak paths being created.

The film reel holders may be arranged to dispense respective rolls of plastics film having adhesive on one side thereof, to improve the sealing of successive layers of film from the first dispenser.

The first dispenser may include a pre-stretch mechanism to apply pre-stretch to the plastics film, prior to the application of a tubular wrapping of film around the outer surface of the bale.

The second dispenser may be arranged to dispense two separate strips of film in a direction axially of the bale, to form said elongate flexible connecting element. Preferably, the second dispenser is arranged to dispense two strips which are engageable with respective opposite sides of the bale, one being engageable with a respective long side of a rectangular cross-section bale, and the other strip being engageable with a respective short side of the rectangular cross-section bale.

Conveniently, each strip is winder than the respective bale side with which it is engageable, so as to overlie opposed edges of the rectangular profile of the bale. The first dispenser to apply film to press the overlaps together.

The second dispenser may be arranged to dispense four separate strips of films in a direction axially of the bale, to form said elongate flexible connecting element. The strip dispensed by the second dispenser may be engageable over a respective edge of the rectangular profile of the bale. Further, each of the strips dispensed by the second dispenser may be engageable with a respective side of a rectangular bale. Also, at least one of the four strips dispensed by the second dispenser may be wider than the respective bale side with which it is engageable.

Preferably, before being ring wrapped by the windings 17, the strips being dispensed in the direction of the bale are air tight connected to each neighbouring strip to form axially a tube. An advantage of this is that an air tight tube, (in the direction of the translation) is formed to secure leakage paths being formed between successive overlapping ring wraps.

The overlapping ends of the films may be positioned at the corner edges of the bale, to provide better protection of the edges of the bale.

The total width of the film dispensed by the second dispenser, in the translation direction, may be wider than the circumference of the bale, and that the ends of the film are connected airtight to each other. (This applies to the flexible tube arrangement).

The second dispenser may be arranged to dispense a flexible tube through which the bale is translated. An advantage of this is that there are no overlaps in the film dispensed in the translation direction, and no need for seals in the translation direction to be made to minimize risk of leakage.

The second dispenser may be arranged to dispense a flexible tube which has been pre-stretched prior to being dispensed in the direction axially of the bale. The tube then may be capable of being shrunk fit over the bale, having the advantage of compression support, and securement against local damage. The circumferential over-length of tube may be folded double on the edges to give better protection.

The tube may be formed by ring wrapping straps of film onto, or at least partly onto a support similar to the size and or the shape of the "parcels" (successive bales or groups of bales), and then dispensed on the parcels. The advantage of this is that an endless tube is formed, and that all sizes and shapes can be formed. The first ring wrapper is tightening the tube from the second dispenser more tightly to the bale, because it is wound directly on the bale instead of on a support. The support is needed because the strips of both ring wrappers are smaller than the gaps between successive "parcels". The gaps are sufficiently large to give enough length for the top end sealing. The tube may be formed by two dispensers, giving the advantage of quicker wrapping of a multi-layer tube.

The dispensers for the two strips may be axially staggered for the same reason as and as is described at the first dispenser. The strips also may be provided with adhesive on one side, to provide better sealing between overlapping windings. Alternatively, the adhesive is only provided on the sides opposing to the other side.

The strips forming the tube may be arranged to be wider than the successive ring wrapped strips, which gives the advantage that they can bridge the gap between "parcels" more easily, possibly without winding on a support.

Desirably, the strips are pre-stretched, giving the advantage that they shrink onto the bale after leaving the support and being dispensed onto the parcels.

The second dispenser may be arranged to convey the ring wrapped tube onto the bale. Alternatively, the second dispenser is arranged to pre-stretch the strip prior to dispensation axially of the bale. The gap to be bridged between successive bales may be wider than half of the maximum diameter of the plain of the bale perpendicular to the translation direction. The advantage of this is to cover the top ends of the film in tube over the gap which has to be stretched, and therefore it is tight over the top end.

The gap to be bridged between successive bales may equal the maximum diameter of the plain of the bale in a direction perpendicular to the translation direction. This has the advantage of covering the top ends, as the film has only to be stretched a little, and overstretching is avoided.

The amount of layers applied by the first dispenser may be higher at the middle of the bale. This has the advantage of facilitating transport of the bale and it is taken into a "clamp" on a loader. This device is gripping the bale in the middle. By having more layers in that position, the risk of damage is reduced.

The amount of layers that are applied on at least one of the ends of the bale, including its corners, is higher on average than on the rest of the bale. This has the advantage of better protection of the corners on the top ends of the bale. These are vulnerable areas during storage.

The strip dispensed in the translation direction of the bale could closes the top ends of the bale, by turning the bale about an axis parallel to the width of the strip after the bale has left the circumferential wrapping device. This has the advantage that the top ends are also closed in a conventional way. The strip is already well connected to the bale when starting the top end wrapping; this saves time and film.

Also the second dispenser could be turned for at least 90 degrees in a plain perpendicular to the translation direction when bridging the gap; this is to narrow the waist between the bales and make the end sealing more easy. When turned (twisted) more than 180 degrees the ends could be sealed by this twist only. The twist (of the tube from the first dispenser) is overlayed by the first dispenser. Preferably the twist of the second dispenser is opposite to the turning of the first one; when the twist of the first is trying to untwist it is held by the twist of the film of the first dispenser.

According to a further aspect of the invention there is provided a method as defined in claim 37.

Preferred embodiments of wrapping apparatus according to the invention will now be described in detail, by way of example only, with reference to the accompanying drawings, in which:
Figure 1 illustrates schematically in plan view, three successive stages in the wrapping of successive bales of parallelopiped cross-section by a first embodiment of the invention;
Figure 2 illustrates schematically the operation of a second embodiment of the invention;
Figure 3 illustrates schematically the operation of a third embodiment of the invention;
Figure 4 illustrates schematically the operation of a fourth embodiment of the invention; and
Figure 5 illustrates schematically the operation of a fifth embodiment of the invention.

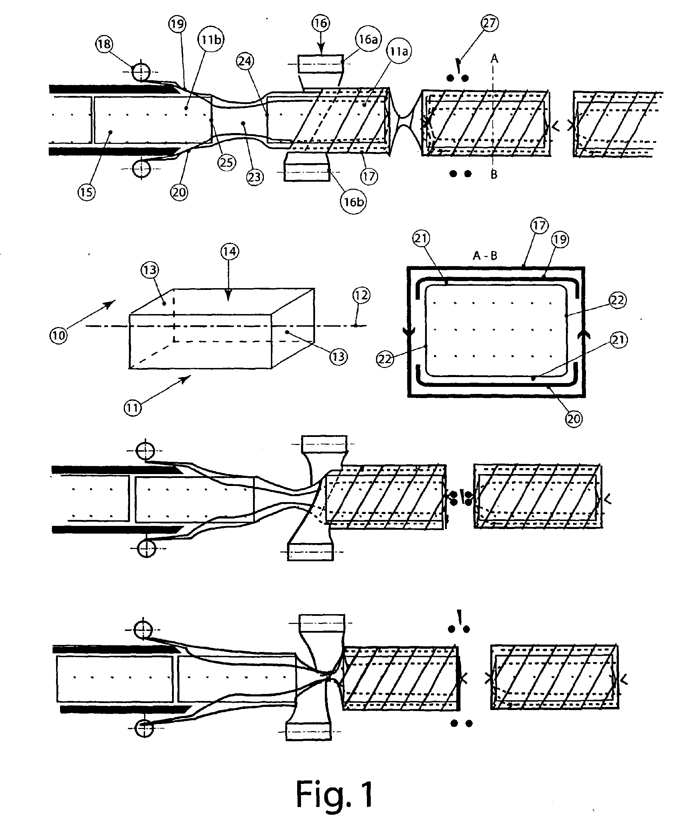

Referring first to Figure 1 of the drawings, a bale wrapping apparatus of the first embodiment of the invention is designated generally by reference 10, and is illustrated showing application of film wrapping to successive bales of a rectangular cross-section. It should be understood that, although there is shown the wrapping of successive individual bales, the invention may be applied also to the wrapping of successive groups of bales, which are stacked together side-by-side, and/or end to end.

A typical bale is shown diagrammatically by reference 11, having a longitudinal axis of symmetry 12, a pair of opposed planar end faces 13, and an outer surface 14 which extends between the planar end faces 13 and which is of rectangular (parallelopiped) cross-section.

The apparatus 10 is therefore capable of wrapping successive bales of agricultural crop material, in which each bale 11 has a generally longitudinal axis 12, a pair of planar end faces 13, and an outer surface 14 which extends between the end faces and which is of parallelopiped cross-section. It should be understood that the apparatus of the invention can be used to wrap cylindrical bales also, in which case the outer surface which extends between the end faces is of circular cross-section.

The apparatus 10 has a loading table 15 to which successive bales 11 are supplied to be supported by the table 15. Downstream of the table 15, there is a first dispenser 16 through which a first bale 11a is relatively moveable in a direction parallel to its longitudinal axis. The dispenser 16 is operative to dispense a strip of film wrapping to form axially overlapping windings 17 on the outer surface 14 of the bale 11a.

There is also provided means to apply relative translational movement between the bale 11a and the first dispenser 16, and which in the illustrated embodiment comprises means to apply axial movement to the dispenser 16 as film reel holders orbit around the longitudinal axis of the bale 11 a.

The apparatus further includes a second dispenser 18 which is arranged to dispense a flexible elongate connecting element in a direction parallel to the axis of the bales 11, and so as to overlie the outer surface of first bale 11a and to underlie the overlapping windings 17 applied to the outer surface 14 of the first bale 11a by the first dispenser 16.

The second dispenser 18 is therefore also operative to dispense the flexible elongate connecting element so as to overlie the outer surface of a next successive bale 11b applied to the table 15, thereby to interconnect two successive bales 11a, 11b.

In the illustrated embodiment, the flexible elongate connecting element takes the form of two separate strips of plastics film 19 and 20, which overlie the opposed long sides 21 of the rectangular cross-section of the outer surface of the bale. It will be noted that the strips 19 and 20 extend throughout the width of each side 21, and also partly overlap the adjacent shorter sides 22 of the rectangular profile.

Therefore, in the first embodiment shown in Figure 1, the flexible elongate connecting element dispensed by the second dispenser 18 takes the form of two separate strips of plastic film, and which interconnect two successive bales 11a and 11b, in which the first bale 11a becomes progressively wrapped by the first dispenser 16, whereas the successive bale 11b is as yet unwrapped. As the first dispenser 16 completes its wrapping of bale 11a, it moves to a "waist" section 23 formed by the film strips 19 and 20 between the adjacent ends 24 and 25 of bales 11a and 11b. The orbiting film dispenser reels of first dispenser 16 move around the waist section 23 whereby the "flexible elongate connecting element" (19, 20) functions as a former around which the windings 17 can be applied by the first dispenser 16, prior to forming axially overlapping windings on the next successive bale 11b.

As can be seen in the first illustration of Figure 1, a "string of wrapped bales" can be formed, connected together like sausages, and the connections between adjacent wrapped bales can be cut at any convenient time, and then the wrapped bales can be collected for storage. Alternatively, the wrapping of the successive bales (or groups of bales) may be carried out at the intended place of storage.

The apparatus illustrated schematically in Figure 1 is particularly suitable for wrapping "square" bales and may be supplied and function as a separate piece of equipment, or may be "integrated" with a square baler.

The primary purpose of the second dispenser 18 therefore is to dispense a "flexible elongate connecting element", although as can be seen in the section on AB, the film strips 19, 20, forming the "flexible elongate connecting elements" also perform a partial wrapping function for the bale. Also, the film strips 19, 20 underlie the subsequently applied helical windings 17, and which helps to seal any possible leakage path which may be creative between the successive windings 17. Cutter holders 27 are provided to cut between successive wrapped bales.

The third illustration in Figure 1 shows a narrowed "waist" connecting section which is formed by "necking down", to provide a smaller area to be tightened when the windings 17 move from one bale to another.

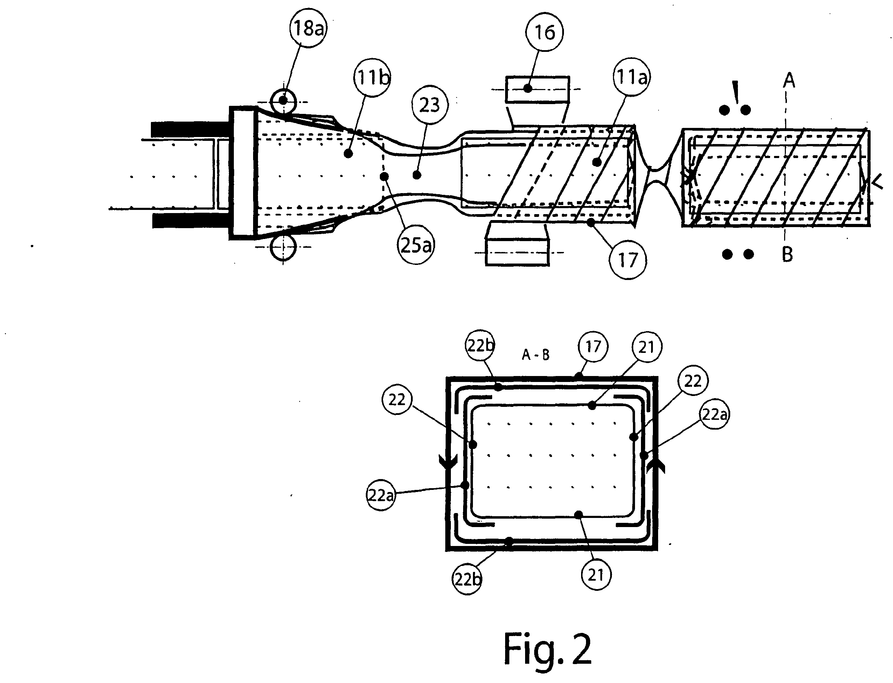

Figures 2 to 5 show further embodiments of the invention, in which different arrangements are provided, to form the "elongate flexible connecting element" between successive bales. Such different arrangements can be seen in particular in the sections taken on lines AB in the different figures of drawings. Parts generally corresponding with those already described with reference to Figure 1 are given the similar references.

In Figure 2, second dispenser 18a dispenses four strips or sheets of film, two of which 22a overlie the short sides 22 of the rectangular profile, and the other two 22b of which overlie the long sides 21 of the profile. Also, adjacent strips overlap each other at the corners of the rectangular profile of the bale, thereby giving increased protection at these potentially vulnerable areas.

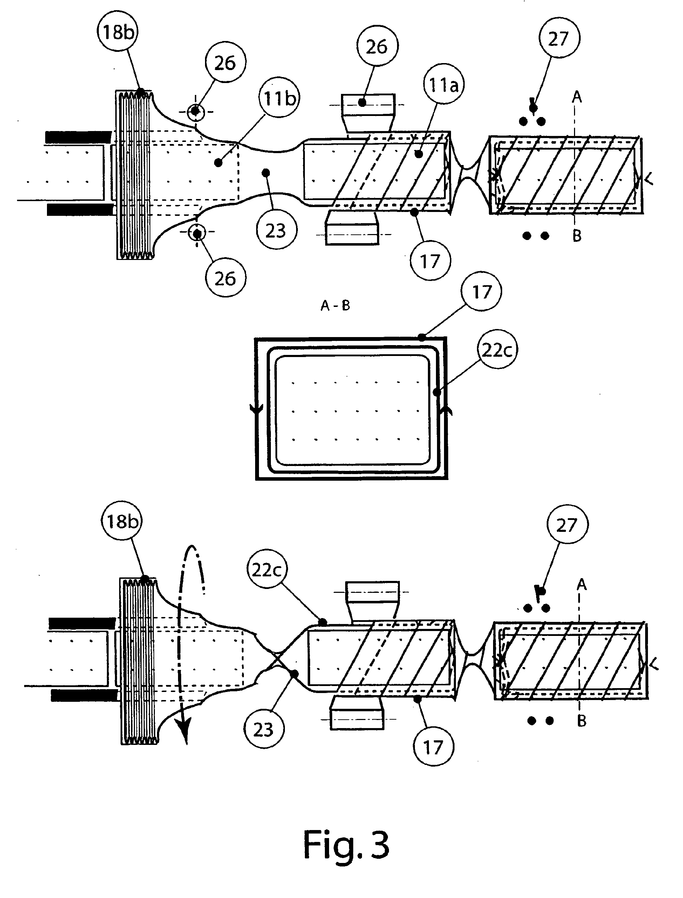

In Figure 3, second dispenser 18b forms a complete enclosure 22c of the outer surface of the bale, prior to the completion of wrapping by first dispenser 16 with windings 17.

The dispenser 18b is fixed, and stores axially spaced folded layers of film in "concertina" form, which are withdrawn successively and preferably undergo pre-stretching by braking rollers 26, prior to application to inclose the entire bale. Clearly, complete enclosure of the bale prior to application of the windings 17, will prevent any leakage paths being created.

To further strengthen the corner regions of the rectangular profile of the bale, the film dispensed by dispenser 18b may apply folded-over portions at each corner, prior to application of the windings 17.

The lower illustration in Figure 3 shows "necking down" of the waste section (and which may be closed down by application of tie wraps (not shown).

This may be achieved by turning the support for the dispenser 18b through at least 90° (about the longitudinal axis of the bales) when covering the waist section; or even by twisting the ends of the wrapping like the end wrappings of sweets or by twisting the bale "in the first wrapper". The dispenser can be turned through more than 180°, whereby the bale ends can be sealed by twisting action alone. Twisting of the second dispenser in an opposite direction to the application of the helical windings by the first dispenser gives a still further enhanced sealing action in the "waist" region.

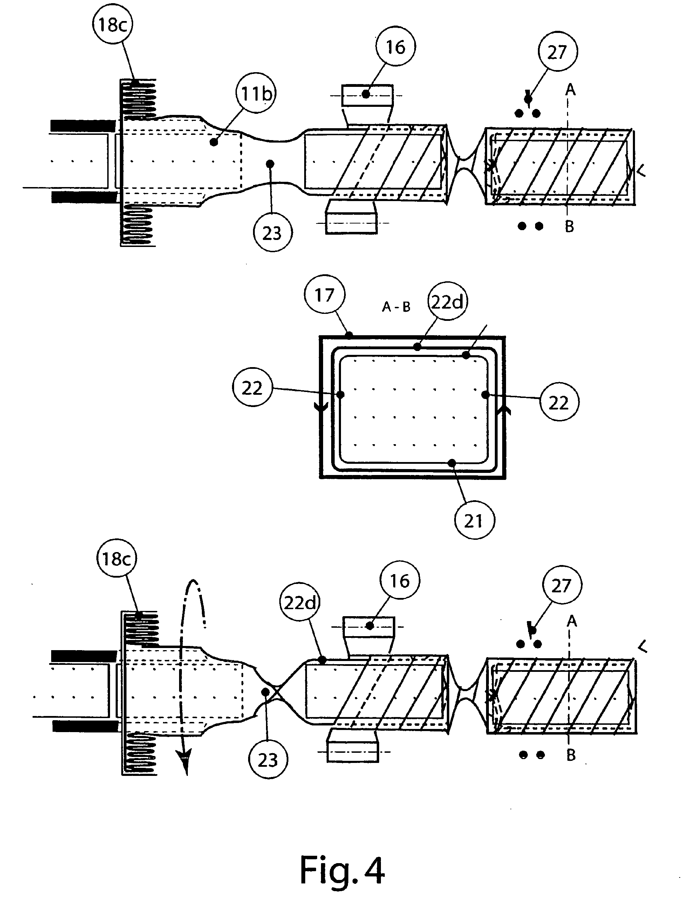

In Figure 4, second dispenser 18c stores radially spaced layers of film, which are dispensed to form complete tubular enclosure 22d, prior to final wrapping by dispenser 16 with windings 17. The film may be pre-stretched by pulling radially outwardly, prior to application to the bale turning the dispensers is counter wise to prevent untwisting.

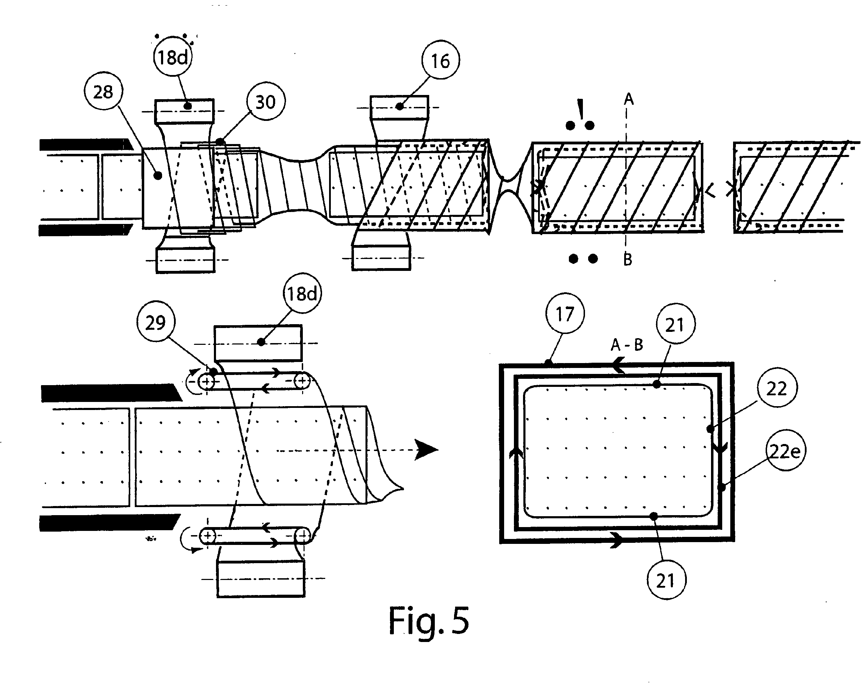

In Figure 5, second dispenser 18d forms a complete tubular enclosure 22e, prior to final wrapping by dispenser 16 with windings 17. The dispenser 18d is mounted on a fixed support 28, and via an endless belt 29 dispenses film to form complete enclosure surrounding the bale. The film in the dispenser 18d maybe a commodity product, which can fit all size of bale. A twisting support 30 is also possible, (when covering the waist) to twist end caps to close the end of each wrapped bale.

In the case of the endless belt 29, this can be driven at a speed less than the bale in order to stretch the film prior to application to the bale.

## Claims

1. Apparatus for wrapping successive bales (11) or successive group of bales of agricultural crop material, in which each bale has (i) a generally longitudinal axis (12), (ii) a pair of planar opposed end faces (13), and (iii) an outer surface (14) which extends between said planar end faces (13) and which is of parallelopiped or circular cross-section and said apparatus comprising:
a table (15) for supporting bales (11) or groups of bales applied successively thereto;
a first dispenser (16) through which a first bale (11a) or group of bales on the table is relatively moveable in a direction parallel to its longitudinal axis (12), said dispenser (16) being operative to dispense a strip of film wrapping to form axially overlapping windings (17) on the outer surface (14) of the bale (11a); and
means for applying relative movement between the said first bale (11a) and the dispenser (16) in said direction parallel to the longitudinal axis (12) of the bale (11a):
**characterised in that** a second dispenser (18) is arranged to dispense a flexible elongate connecting element (19,20) in a direction parallel to the axis (12) of a bale (11 a), to overlie the outer surface of said first bale (11a) and to underlie the overlapping windings (17) applied to the outer surface (14) by said first dispenser (16), in which the second dispenser (18) is also operative to dispense said flexible elongate connecting element (19,20) to overlie the outer surface of a next successive bale (11b) or successive group of bales applied to the table (15) so as to interconnect two successive bales (11a, 11b) or groups of bales and also function as a former around which said strip of film wrapping (17) can be applied by the first dispenser (16), prior to forming axially overlapping windings (17) on said next successive bale (11b) or groups of bales.

2. Apparatus according to claim 1, **characterised in that** the first dispenser (16) comprises two circumferentially spaced film reel holders (16a, 16b), each capable of dispensing a separate strip of plastics film.

3. Apparatus according to claim 2, **characterised in that** the film reel holders (16a, 16b) are axially spaced from each other with respect to the axis (12) of the bale (11).

4. Apparatus according to claim 2 or 3, **characterised in that** the film reel holders (16a, 16b) are arranged to dispense respective windings which overlap axially by up to 50% of the width of each winding.

5. Apparatus according to any one of claims 2 to 4, **characterised in that** the film reel holders (16a, 16b) are arranged to dispense respective rolls of plastics films having adhesive on one side thereof.

6. Apparatus according to any one of claims 1 to 5, **characterised in that** the first dispenser (16) includes a pre-stretch mechanism to apply pre-stretch to the plastics film, prior to the application of a tubular wrapping of film around the outer surface (14) of the bale (11).

7. Apparatus according to any one of claims 1 to 6, **characterised in that** the second dispenser (18) is arranged to dispense two separate strips (19,20) of film in a direction axially of the bale (11), to form said elongate flexible connecting element.

8. Apparatus according to claim 7, **characterised in that** the second dispenser (18) is arranged to dispense two strips (19, 20) which are engageable with respective opposite sides (21, 22) of the bale (11).

9. Apparatus according to claim 8, **characterised in that** each strip (19, 20) is engageable with a respective long side (21) of a rectangular cross-section bale (11).

10. Apparatus according to claim 8, **characterised in that** each strip (19, 20) is engageable with a respect short side (22) of a rectangular cross-section bale (11).

11. Apparatus according to claim 9 or 10, **characterised in that** each strip (19,20) is wider than the respective bale side (21, 22) with which it is engageable, so as to overlie opposed edges of the rectangular profile of the bale (11).

12. Apparatus according to any one of claims 1 to 6, **characterised in that** the second dispenser (18) is arranged to dispense four separate strips of film in a direction axially of the bale (11), to form said elongate flexible connecting element.

13. Apparatus according to claim 12, **characterised in that** each strip dispensed by the second dispenser (18) is engageable over a respective edge of the rectangular profile of the bale.

14. Apparatus according to claim 12 or 13, **characterised in that** each of the strips dispensed by the second dispenser (18) is engageable with a respective side of a rectangular bale.

15. Apparatus according to any one of claims 12 to 14, **characterised in that** at least one of the four strips dispensed by the second dispenser (18) is wider than the respective bale side (21, 22) with which it is engageable.

16. Apparatus according to claim 15, **characterized in that** before being wring wrapped by the windings 17, the strips being dispensed in the direction of the bale, are airtight connected to each neighbouring strip to axial form a tube .

17. Apparatus according to claim 15, **characterized in that** the overlapping ends of the films are positioned at the corner edges of the bale.

18. Apparatus according to claim 1 **characterized that** the total width of the film dispensed by the second dispenser (18) in the translation direction is wider than the circumference of the bale and that the ends of the film are connected airtight to each other.

19. Apparatus according to claim 1, **characterized in that** the second dispenser (18) is arranged to dispense a flexible tube through which the bale is translated.

20. Apparatus according to claim 19, **characterized in that** the second dispenser (18) is arranged to dispense a flexible tube which has been pre-stretched prior to being dispensed in the direction axially of the bale.

21. Apparatus according to claim 19 **characterized in that** the tube is capable of being shrunk fit over the bale.

22. Apparatus according to claim 20 **characterized in that** the circumferential over-length of tube is folded double on the edges to give better protection.

23. Apparatus according to claim 19 **characterized in that** the tube is formed by ring wrapping straps of film onto or at least partly onto a support similar to the size and or the shape of the parcels and then dispensed on the parcels.

24. Apparatus according to claim 20 **characterized in that** the tube is formed by 2 dispensers

25. Apparatus according to claim 20 **characterized in that** the dispensers for the two strips are axially staggered

26. Apparatus according to claim 20 **characterized in that** the strips are provided with adhesive on one side.

27. Apparatus according to claim 25 **characterized in that** the adhesive is only provided on the sides opposing to the other side.

28. Apparatus according to claim 20 **characterized in that** the strips forming the tube are wider than the successive ring wrapped strips.

29. Apparatus according to claim 20 **characterized in that** the straps are pre-stretched

30. Apparatus according to claim 29, **characterized in that** the second dispenser (18) is arranged to convey the ring wrapped tube onto the bale.

31. Apparatus according to claim 29, **characterized in that** the second dispenser (18) is arranged to pre-stretch the strip prior to dispensation axially of the bale.

32. Apparatus according to claim 1 **characterized that** the gap to be bridged between successive bales (11a, 11b) is wider than half of the maximum diameter of the plane of the bale perpendicular to the translation.

33. Apparatus according to claim 1 **characterized that** the gap to be bridged between successive bales (11a, 11b) equals the maximum diameter of the plain of the bale perpendicular to the translation.

34. Apparatus according to claim 1 **characterized in that** the amount of layers applied by the first dispenser (16) is higher at the middle of the bale.

35. Apparatus according to claim 1 **characterized in that** the amount of layers that are applied on at least one of the ends including its corners of the bale is higher than on the average of the rest of the bale.

36. Apparatus according to claim 1 **characterized in that** the strip dispensed in the translation direction of the bale is closing the top ends of the bale by turning the bale over an axis parallel to the width of the said strap after the bale has left the circumferential wrapping device.

37. A method of wrapping successive bales (11a, 11b) of agricultural crop material, in which each bale has (i) a generally longitudinal axis (12), (ii) a pair of planar opposed end faces (13), and (iii) an outer surface (14) which extends between said planar end faces (13) and which is of parallelopiped or circular cross-section, and comprising the steps of:
dispensing at least one flexible elongate connecting element (19,20) in a direction parallel to the axis (12) of a first bale (11a) so as to overlie the outer surface (14) of the first bale (11a) or group of bales and also the outer surface of the next successive bale (11b) or successive group of bales, and forming a tubular waist section (23) between adjacent ends (24, 25) of the bales (11a, 11b) or group of bales;
applying helically overlapping windings (17) of film around the outer surface (14) of the first bale (11a) and also around the flexible elongate connecting element (19,20);
wrapping the windings (17) around the tubular waist section (23) to form a temporary connection between successive bales (11 a, 11 b); and
then applying the windings (17) to the outer surface (14) of the next bale (11b), and overlying the flexible elongate connecting elements (19) thereon.

38. A method according to claim 37, **characterised in that** the connection between successive wrapped bales (11a, 11b) is cut in the region of the waist sections (23).

39. Apparatus according to claim 1, in which when the second dispenser (16) applies film around the waist section (23) between successive bales, or groups of bales, the dispensers are turned in a plane perpendicular to the transverse direction of the bale in order to provide enhanced necking-down of the waist section.

40. Apparatus according to claim 39, in which twisting of the second dispenser (18) is reverse to the winding of the first dispenser in order to prevent untwisting by one of the layers.

41. Apparatus according to claim 39, in which the second dispenser (18) is turnable through at least 90° in a plain perpendicular to the translation direction when bridging the gap region between successive bales, or groups of bales, in order to narrow the waist in the gap region and thereby make end sealing more easy.

42. Apparatus according to claim 41, in which the second dispenser (18) is turnable through more than 180°, whereby the ends are sealable by twisting action alone.

## Patentansprüche

1. Vorrichtung zum Einwickeln aufeinander folgender Ballen (11) oder aufeinander folgender Gruppen von Ballen von landwirtschaftlichem Erntematerial, in welcher jeder Ballen (i) eine sich allgemein in Längsrichtung erstreckende Achse (12), (ii) ein Paar von ebenen gegenüberliegenden Endflächen (13) und (iii) eine äußere Oberfläche (14) aufweist, welche sich zwischen den ebenen Endflächen (13) erstreckt und welche von parallelepipedischem oder rundem Querschnitt ist, und wobei die Vorrichtung umfasst:
einen Tisch (15) zum Tragen der Ballen (11) oder von Gruppen von Ballen, welche aufeinander folgend darauf angeordnet werden;
ein erstes Ausgabegerät (16), durch welches ein erster Ballen (11a) oder eine Gruppe von Ballen auf dem Tisch relativ dazu beweglich in eine Richtung parallel zu ihrer Längsachse (12) ist, wobei das Ausgabegerät (16) insofern arbeitet, um einen Streifen von Folienverpackungsmaterial auszugeben, um axial überlappende Wicklungen (17) auf der äußeren Oberfläche (14) des Ballens (11a) auszubilden; und
Mittel zum Ausführen relativer Bewegung zwischen dem ersten Ballen (11a) und dem Ausgabegerät (16) in der Richtung parallel zur Längsachse (12) des Ballens (11a);
**dadurch gekennzeichnet, dass** ein zweites Ausgabegerät (18) angeordnet ist, um ein biegsames, längliches Verbindungselement (19, 20) in eine Richtung parallel zur Achse (12) des Ballens (11a) auszugeben, um über der äußeren Oberfläche des ersten Ballens (11a) zu liegen und unter den überlappenden Wicklungen (17) zu liegen, die auf die äußere Oberfläche (14) durch das ersten Ausgabegerät (16) aufgebracht werden, wobei das zweite Ausgabegerät (18) auch tätig ist, um das biegsame, längliche Verbindungselement (19, 20) auszugeben, um über der äußeren Oberfläche eines nächsten nachfolgenden Ballens (11 b) oder nachfolgenden Gruppe von Ballen, die auf dem Tisch (15) aufgebracht ist, zu liegen, um so zwei aufeinander folgende Ballen (11a, 11 b) oder Gruppen von Ballen miteinander zu verbinden, und auch als ein Formgeber dient, um welchen der Streifen von Folienwickelung (17) durch das erste Ausgabegerät (16) aufgebracht werden kann, bevor die axial überlappenden Wicklungen (17) auf dem nächsten nachfolgenden Ballen (11b) oder auf den Gruppen von Ballen ausgebildet werden.

2. Vorrichtung nach Anspruch 1, **dadurch gekennzeichnet, dass** das erste Ausgabegerät (16) zwei entlang des Umfangs beabstandete Folienrollenhalter (16a, 16b) umfasst, wobei jede in der Lage ist einen eigenen Streifen von Kunststofffolie auszugeben.

3. Vorrichtung nach Anspruch 2, **dadurch gekennzeichnet, dass** die zwei Folienrollenhalter (16a, 16b) axial zu einander in Bezug auf die Achse (12) des Ballens (11) beabstandet sind.

4. Vorrichtung nach Anspruch 2 oder 3, **dadurch gekennzeichnet, dass** die Folienrollenhalter (16a, 16b) so angeordnet sind, um jeweils Wicklungen auszugeben, welche einander axial bis zu 50% der Breite jeder Wicklung überlappen.

5. Vorrichtung nach Anspruch 2 bis 4, **dadurch gekennzeichnet, dass** die Folienrollenhalter (16a, 16b) so angeordnet sind, um jeweils Rollen von Kunststofffolien auszugeben, die Klebemittel auf einer ihrer Seiten aufweisen.

6. Vorrichtung nach Anspruch 1 bis 5, **dadurch gekennzeichnet, dass** das erste Ausgabegerät (16) einen Vordehnmechanismus umfasst, um eine Vordehnung auf die Kunststofffolie aufzubringen vor dem Aufbringen einer rohrförmigen Wickelung der Folie um die äußere Oberfläche (14) des Ballens (11).

7. Vorrichtung nach Anspruch 1 bis 6, **dadurch gekennzeichnet, dass** das zweite Ausgabegerät (18) so angeordnet ist, um zwei getrennte Streifen (19, 20) von Folie in eine Richtung axial zum Ballen (11) auszubringen, um das längliche, biegsame Verbindungselement auszubilden.

8. Vorrichtung nach Anspruch 7, **dadurch gekennzeichnet, dass** das zweite Ausgabegerät (18) so angeordnet ist, um zwei Streifen (19, 20) auszugeben, welche mit jeweils gegenüberliegenden Seiten (21, 22) des Ballens (11) in Eingriff gebracht werden können.

9. Vorrichtung nach Anspruch 8, **dadurch gekennzeichnet, dass** jeder Streifen (19, 20) in Eingriff mit einer jeweiligen langen Seite (21) eines Ballens mit rechteckigem Querschnitt (11) gebracht werden kann.

10. Vorrichtung nach Anspruch 8, **dadurch gekennzeichnet, dass** jeder Streifen (19, 20) in Eingriff mit einer jeweiligen kurzen Seite (22) eines Ballens mit rechteckigem Querschnitt (11) gebracht werden kann.

11. Vorrichtung nach Anspruch 9 oder 10, **dadurch gekennzeichnet, dass** jeder Streifen (19, 20) breiter als die jeweilige Ballenseite (21, 22) ist, mit welcher er in Eingriff gebracht werden kann, um so gegenüberliegende Kanten des rechteckigen Profils des Ballens (11) zu überdecken.

12. Vorrichtung nach jedem der Ansprüche 1 bis 6, **dadurch gekennzeichnet, dass** das zweite Ausgabegerät (18) so angeordnet ist, um vier getrennte Streifen an Folie in eine Richtung axial zum Ballen (11) auszugeben, um das längliche, biegsame Verbindungselement auszubilden.

13. Vorrichtung nach Anspruch 12, **dadurch gekennzeichnet, dass** jeder Streifen, welcher durch das zweite Ausgabegerät (18) ausgegeben wird, über eine jeweilige Kante des rechteckigen Profils des Ballens in Eingriff gebracht werden kann.

14. Vorrichtung nach Anspruch 12 oder 13, **dadurch gekennzeichnet, dass** jeder der Streifen, welcher durch das zweite Ausgabegerät (18) ausgegeben wird, mit einer jeweiligen Seite eines rechteckigen Ballens in Eingriff gebracht werden kann.

15. Vorrichtung nach jedem der Ansprüche 12 bis 14, **dadurch gekennzeichnet, dass** wenigstens einer der vier getrennten Streifen, welche durch das zweite Ausgabegerät (18) ausgegeben werden, breiter ist als die jeweilige Ballenseite (21, 22) mit welcher er in Eingriff gelangt.

16. Vorrichtung nach Anspruch 15, **dadurch gekennzeichnet, dass** die Streifen, welche in der Richtung des Ballens ausgegeben werden, bevor sie durch die Wicklungen (17) verdrehend umwickelt werden, luftdicht mit jedem benachbarten Streifen verbunden werden, um axial eine Röhre auszubilden.

17. Vorrichtung nach Anspruch 15, **dadurch gekennzeichnet, dass** die überlappenden Enden der Folien an den Eckkanten des Ballens positioniert sind.

18. Vorrichtung nach Anspruch 1, **dadurch gekennzeichnet, dass** die Gesamtbreite der Folie, welche durch das zweite Ausgabegerät (18) in der Verschiebungsrichtung ausgegeben wird, breiter ist als der Umfang des Ballens und dass die Enden der Folie luftdicht miteinander verbunden sind.

19. Vorrichtung nach Anspruch 1, **dadurch gekennzeichnet, dass** das zweite Ausgabegerät (18) angeordnet ist, um einen biegsamen Schlauch auszugeben, durch welchen der Ballen verschoben wird.

20. Vorrichtung nach Anspruch 19, **dadurch gekennzeichnet, dass** das zweite Ausgabegerät (18) angeordnet ist, um einen biegsamen Schlauch auszugeben, welcher vorgedehnt wurde, bevor er in die Richtung axial zum Ballen ausgegeben wird.

21. Vorrichtung nach Anspruch 19, **dadurch gekennzeichnet, dass** der Schlauch über dem Ballen passgeschrumpft werden kann.

22. Vorrichtung nach Anspruch 20, **dadurch gekennzeichnet, dass** die Umfangsüberlänge des Schlauchs an den Kanten doppelt gefaltet ist, um besseren Schutz zu bieten.

23. Vorrichtung nach Anspruch 19, **dadurch gekennzeichnet, dass** der Schlauch durch Im-Kreis-Wickeln von Folienstreifen auf oder wenigstens teilweise auf eine Halterung ähnlich der Größe und/oder der Gestalt der Pakete ausgebildet wird und dann auf die Pakete ausgegeben wird.

24. Vorrichtung nach Anspruch 20, **dadurch gekennzeichnet, dass** der Schlauch durch 2 Ausgabegeräte ausgebildet wird.

25. Vorrichtung nach Anspruch 20, **dadurch gekennzeichnet, dass** die Ausgabegeräte für die zwei Streifen axial gestaffelt sind.

26. Vorrichtung nach Anspruch 20, **dadurch gekennzeichnet, dass** die Streifen mit Klebemittel an einer Seite bereit gestellt sind.

27. Vorrichtung nach Anspruch 25, **dadurch gekennzeichnet, dass** das Klebemittel nur auf den Seiten, welche der anderen Seite gegenüberliegen, vorgesehen ist.

28. Vorrichtung nach Anspruch 20, **dadurch gekennzeichnet, dass** die Streifen, welche den Schlauch ausbilden, breiter sind als die aufeinander folgenden ringgewickelten Streifen.

29. Vorrichtung nach Anspruch 20, **dadurch gekennzeichnet, dass** die Streifen vorgedehnt sind.

30. Vorrichtung nach Anspruch 29, **dadurch gekennzeichnet, dass** das zweite Ausgabegerät (18) angeordnet ist, um den ringgewickelten Schlauch auf den Ballen zu fördern.

31. Vorrichtung nach Anspruch 29, **dadurch gekennzeichnet, dass** das zweite Ausgabegerät (18) angeordnet ist, um den Streifen vor dem Ausgeben axial zum Ballen vorzudehnen.

32. Vorrichtung nach Anspruch 1, **dadurch gekennzeichnet, dass** der Spalt, welcher zwischen den aufeinander folgenden Ballen (11a, 11b) überbrückt werden muss, breiter ist als die Hälfte des maximalen Durchmessers der Ebene des Ballens senkrecht zum Vorschub.

33. Vorrichtung nach Anspruch 1, **dadurch gekennzeichnet, dass** der Spalt, welcher zwischen den aufeinander folgenden Ballen (11a, 11b) überbrückt werden muss, gleich ist dem maximalen Durchmesser der Ebene des Ballens senkrecht zum Vorschub.

34. Vorrichtung nach Anspruch 1, **dadurch gekennzeichnet, dass** die Anzahl an Schichten, welche durch das erste Ausgabegerät (16) aufgelegt wird, in der Mitte des Ballens höher ist.

35. Vorrichtung nach Anspruch 1, **dadurch gekennzeichnet, dass** die Anzahl an Schichten, welche auf wenigstens einem der Enden, darunter den jeweiligen Ecken des Ballens, aufgelegt wird, höher ist als auf dem Durchschnitt des Rests des Ballens.

36. Vorrichtung nach Anspruch 1, **dadurch gekennzeichnet, dass** der Streifen, welcher in der Vorschubrichtung des Ballens ausgegeben wird, die oberen Enden des Ballens durch Drehen des Ballens um eine Achse parallel zur Breite des Streifens, nachdem der Ballen die Umfangswickelvorrichtungen verlassen hat, verschließt.

37. Verfahren zum Einwickeln aufeinander folgender Ballen (11a, 11b) von landwirtschaftlichem Erntematerial, in welchem jeder Ballen (i) eine sich allgemein in Längsrichtung erstreckende Achse (12), (ii) ein Paar von ebenen, gegenüberliegenden Endflächen (13) und (iii) eine äußere Oberfläche (14) aufweist, welche sich zwischen den ebenen Endflächen (13) erstreckt und welche von parallelepipedischem oder rundem Querschnitt ist, und wobei das Verfahren die Schritte umfasst:
Ausgeben wenigstens eines biegsamen, länglichen Verbindungselements (19, 20) in eine Richtung parallel zur Achse (12) eines ersten Ballens (11a), um so über der äußeren Oberfläche (14) des ersten Ballens (11a) oder einer Gruppe von Ballen und auch über der äußeren Oberfläche des nächsten nachfolgenden Ballens (11b) oder der nachfolgenden Gruppe von Ballen zu liegen, und Ausbilden eines rohrförmigen Taillenabschnitts (23) zwischen benachbarten Enden (24, 25) der Ballen (11a, 11 b) oder Gruppe von Ballen;
Aufbringen von spiralförmig überlappenden Wicklungen (17) aus Folie um die äußere Oberfläche (14) des ersten Ballens (11a) und auch um das biegsame, längliche Verbindungselement (19, 20);
Wickeln der Wicklungen (17) um den rohrförmigen Taillenabschnitt (23), um eine vorläufige Verbindung zwischen aufeinander folgenden Ballen (11a, 11b) auszubilden; und
Aufbringen der Wicklungen (17) um die äußere Oberfläche (14) des nächsten Ballens (11b) und Überwickeln der biegsamen, länglichen Verbindungselemente (19) darauf.

38. Verfahren nach Anspruch 37, **dadurch gekennzeichnet, dass** die Verbindung zwischen aufeinander folgenden gewickelten Ballen (11a, 11 b) im Bereich der Taillenabschnitte (23) durchgeschnitten wird.

39. Vorrichtung nach Anspruch 1, in welcher, wenn das zweite Ausgabegerät (18) Folie um den Taillenabschnitt (23) zwischen aufeinander folgenden Ballen oder Gruppen von Ballen aufbringt, die Ausgabegeräte in einer Ebene senkrecht zur Querrichtung des Ballens gedreht werden, um ein verbessertes Abschnüren des Taillenabschnitts bereit zu stellen.

40. Vorrichtung nach Anspruch 39, in welcher das Verdrehen des zweiten Ausgabegeräts (18) gegenläufig zu dem Wickeln des ersten Ausgabegeräts erfolgt, um das Aufdrehen durch eine der Schichten zu verhindern.

41. Vorrichtung nach Anspruch 39, in welcher das zweite Ausgabegerät (18) um wenigstens 90° in einer Ebene senkrecht zur Vorschubrichtung drehbar ist, wenn der Spaltbereichs zwischen aufeinander folgenden Ballen oder Gruppen von Ballen überbrückt wird, um die Taille im Spaltbereich eng zu machen und **dadurch** die Endabdichtung leichter gestaltbar zu machen.

42. Vorrichtung nach Anspruch 41, in welcher das zweite Ausgabegerät (18) um mehr als 180° drehbar ist, wodurch die Enden durch die Verdrehungshandlung allein abgedichtet sind.

## Revendications

1. Appareil d'enrubannage de balles successives (11) ou des groupes successifs de balles d'une matière provenant d'une culture agricole, dans lequel chaque balle a (i) un axe généralement longitudinal (12), (ii) une paire de faces d'extrémité opposées planaires (13) et (iii) une surface externe (14) qui s'étend entre lesdites faces d'extrémité planaires (13) et qui a une coupe transversale en forme de parallélépipède ou circulaire, ledit appareil comprenant :
une table (15) pour supporter des balles (11) ou un groupe de balles appliquées successivement sur celle-ci ;
un premier distributeur (16) à travers lequel une première balle (11a) ou premier groupe de balles sur la table est relativement mobile suivant une direction parallèle à son axe longitudinal (12), ledit distributeur (16) fonctionnant de façon à distribuer une bande de film d'enveloppement pour former des enroulements qui se chevauchent axialement (17) sur la surface externe (14) de la balle (11a) ; et
des moyens pour appliquer un mouvement relatif entre ladite première balle (11a) et le distributeur (16) suivant ladite direction parallèle à l'axe longitudinal (12) de la balle (11a) ;
**caractérisé en ce qu'**un second distributeur (18) est agencé pour distribuer un élément de liaison allongé flexible (19, 20) suivant une direction parallèle à l'axe (12) d'une balle (11a), pour être superposé à la surface externe de la première balle (11a) et pour reposer sous les enroulements qui se chevauchent (17) appliqués à la surface externe (14) par ledit premier distributeur (16), dans lequel le second distributeur (18) fonctionne également de façon à distribuer ledit élément de liaison allongé et flexible (19, 20) de façon à ce qu'il soit superposé à la surface externe d'une balle successive suivante (11b) ou d'un groupe successif de balles suivantes en application sur la table (15) de façon à interconnecter deux balles successives (11a, 11b) ou deux groupes de balles successifs et fonctionner également comme dispositif d'emballage autour duquel ladite bande de film d'enveloppement (17) peut être appliquée par le premier distributeur (16) avant de former les enroulements qui se chevauchent axialement (17) sur ladite balle successive suivante (11b) ou groupes de balles suivantes.

2. Appareil selon la revendication 1, **caractérisé en ce que** le premier distributeur (16) comprend deux supports de bobine de film espacés de manière circonférentielle (16a, 16b), chacun d'entre eux pouvant distribuer une bande séparée de film plastique.

3. Appareil selon la revendication 2, **caractérisé en ce que** les supports de bobine de film (16a, 16b) sont espacés axialement l'un de l'autre par rapport à l'axe (12) de la balle (11).

4. Appareil selon la revendication 2 ou 3, **caractérisé en ce que** les supports de bobine de film (16a, 16b) sont agencés de façon à distribuer des enroulements respectifs qui se chevauchent axialement selon un rapport allant jusqu'à 50 % de la largeur de chaque bobine.

5. Appareil selon l'une quelconque des revendications 2 à 4, **caractérisé en ce que** les supports de bobine de film (16a, 16b) sont agencés de façon à distribuer des rouleaux de film plastique ayant un adhésif sur un de leurs côtés.

6. Appareil selon l'une quelconque des revendications 1 à 5, **caractérisé en ce que** le premier distributeur (16) comprend un dispositif de pré-étirement pour appliquer un pré-étirement au film plastique, avant l'application d'un enroulement tubulaire de film autour de la surface externe (14) de la balle (11).

7. Appareil selon l'une quelconque des revendications 1 à 6, **caractérisé en ce que** le second distributeur (18) est agencé pour distribuer deux bandes séparées (19, 20) de film suivant une direction axiale à la balle (11), pour former ledit élément de liaison allongé et flexible.

8. Appareil selon la revendication 7, **caractérisé en ce que** le second distributeur (18) est agencé pour distribuer deux bandes (19, 20) qui peuvent entrer en prise avec des côtés opposés respectifs (21, 22) de la balle (11).

9. Appareil selon la revendication 8, **caractérisé en ce que** chaque bande (19, 20) peut entrer en prise avec un côté long respectif (21) d'une balle ayant une coupe transversale rectangulaire (11).

10. Appareil selon la revendication 8, **caractérisé en ce que** chaque bande (19, 20) peut entrer en prise avec un côté court respectif (22) d'une balle ayant une coupe transversale rectangulaire (11).

11. Appareil selon la revendication 9 ou 10, **caractérisé en ce que** chaque bande (19, 20) est plus large que le côté de balle respectif (21, 22) avec lequel elle peut entrer en prise, de façon à recouvrir les bords opposés du profil rectangulaire de la balle (11).

12. Appareil selon l'une quelconque des revendications 1 à 6, **caractérisé en ce que** le second distributeur (18) est agencé de façon à distribuer quatre bandes séparées de film suivant une direction axiale à la balle (11), pour former ledit élément de liaison élongé et flexible.

13. Appareil selon la revendication 12, **caractérisé en ce que** chaque bande distribuée par le second distributeur (18) peut entrer en prise sur un bord respectif du profil rectangulaire de la balle.

14. Appareil selon la revendication 12 ou 13, **caractérisé en ce que** chacune des bandes distribuée par le second distributeur (18) peut entrer en prise avec un côté respectif d'une balle rectangulaire.

15. Appareil selon l'une quelconque des revendications 12 à 14, **caractérisé en ce qu'**au moins une des quatre bandes distribuée par le second distributeur (18) est plus large que le côté de la balle respectif (21, 22) avec lequel elle peut entrer en prise.

16. Appareil selon la revendication 15, **caractérisé en ce qu'**avant d'être enveloppées par torsion par les bobines 17, les bandes distribuées suivant la direction de la balle sont reliées, d'une façon étanche à l'air, à chacune des bandes avoisinantes pour former de façon axiale un tube.

17. Appareil selon la revendication 15, **caractérisé en ce que** les extrémités des films qui se chevauchent sont positionnées au niveau des bords de coin de la balle.

18. Appareil selon la revendication 1, **caractérisé en ce que** la largeur totale du film distribué par le second distributeur (18) suivant la direction de translation est plus large que la circonférence de la balle et **en ce que** les extrémités du film sont reliées les unes aux autres de façon à être étanches à l'air.

19. Appareil selon la revendication 1, **caractérisé en ce que** le second distributeur (18) est agencé pour distribuer un tube flexible à travers lequel la balle est déplacée par translation.

20. Appareil selon la revendication 19, **caractérisé en ce que** le second distributeur (18) est agencé pour distribuer un tube flexible qui a été pré-étiré avant d'être distribué suivant la direction axiale à la balle.

21. Appareil selon la revendication 19, **caractérisé en ce que** le tube peut être ajusté par rétrécissement sur la balle.

22. Appareil selon la revendication 20, **caractérisé en ce que** la longueur en surplus du tube est pliée en deux sur les bords afin de procurer plus de protection.

23. Appareil selon la revendication 19, **caractérisé en ce que** le tube est formé en enroulant en anneau des bandes de film sur, ou au moins en partie sur, un support similaire à la taille et ou à la forme des morceaux et distribués ensuite sur les morceaux.

24. Appareil selon la revendication 20, **caractérisé en ce que** le tube est formé par 2 distributeurs.

25. Appareil selon la revendication 20, **caractérisé en ce que** les distributeurs pour les deux bandes sont axialement décalés.

26. Appareil selon la revendication 20, **caractérisé en ce que** les bandes sont pourvues d'un adhésif sur un de leur côté.

27. Appareil selon la revendication 25, **caractérisé en ce que** l'adhésif est fourni seulement sur les côtés s'opposant à l'autre côté.

28. Appareil selon la revendication 20, **caractérisé en ce que** les bandes formant le tube sont plus larges que les bandes enroulées en anneau successives.

29. Appareil selon la revendication 20, **caractérisé en ce que** les bandes sont pré-étirées.

30. Appareil selon la revendication 29, **caractérisé en ce que** le second distributeur (18) est agencé pour acheminer le tube enroulé en forme d'anneau sur la balle.

31. Appareil selon la revendication 29, **caractérisé en ce que** le second distributeur (18) est agencé pour pré-étirer la bande avant la distribution axiale de la balle.

32. Appareil selon la revendication 1, **caractérisé en ce que** l'espace devant être rempli entre les balles successives (11a, 11b) est plus large que la moitié du diamètre maximum du plan de la balle perpendiculaire à la translation.

33. Appareil selon la revendication 1, **caractérisé en ce que** l'espace devant être rempli entre les balles successives (11a, 11b) est égal au diamètre maximum de la partie pleine de la balle perpendiculaire à la translation.

34. Appareil selon la revendication 1, **caractérisé en ce que** la quantité de couches appliquées par le premier distributeur (16) est supérieure au milieu de la balle.

35. Appareil selon la revendication 1, **caractérisé en ce que** la quantité de couches qui sont appliquées sur au moins une des extrémités de la balle, y compris ses coins, est supérieure à la moyenne sur le reste de la balle.

36. Appareil selon la revendication 1, **caractérisé en ce que** la bande distribuée suivant la direction de translation de la balle ferme les extrémités supérieures de la balle en faisant pivoter la balle sur un axe parallèle à la largeur de ladite bande une fois que la balle a quitté le dispositif d'enroulement circonférentiel.

37. Procédé d'enrubannage de balles successives (11a, 11b) d'une matière provenant d'une culture agricole, dans lequel chaque balle a (i) un axe généralement longitudinal (12), (ii) une paire de faces d'extrémité opposées planaires (13) et (iii) une surface externe (14) qui s'étend entre lesdites faces d'extrémité planaires (13) et qui a une coupe transversale en forme de parallélépipède ou circulaire, lequel procédé comprend les étapes consistant à :
distribuer au moins un élément de liaison élongé et flexible (19, 20) suivant une direction parallèle à l'axe (12) d'une première balle (11a) de façon à recouvrir la surface externe (14) de la première balle (11a) ou premier groupe de balles ainsi que la surface externe de la balle successive suivante (11b) ou groupe successif de balles suivantes et former une section d'étranglement tubulaire (23) entre les extrémités adjacentes (24, 25) des balles (11a, 11b) ou groupes de balles ;
appliquer des enroulements de film qui se chevauchent de manière hélicoïdale (17) autour de la surface externe (14) de la première balle (11a) ainsi qu'autour de l'élément de liaison élongé et flexible (19, 20) ;
enrubanner les enroulements (17) autour de la section d'étranglement tubulaire (23) pour former une liaison provisoire entre des balles successives (11a, 11b), et
appliquer ensuite les enroulements (17) à la surface externe (14) de la balle suivante (11b) et recouvrir les éléments de liaison allongés et flexibles (19) sur celle-ci.

38. Procédé selon la revendication 37, **caractérisé en ce que** la liaison entre des balles enveloppées successives (11a, 11b) est coupée dans la région des sections d'étranglement (23).

39. Appareil selon la revendication 1, dans lequel quand le second distributeur (16) applique un film autour de la section d'étranglement (23) entre des balles successives, ou groupes de balles successifs, les distributeurs sont pivotés dans un plan perpendiculaire à la direction transversale de la balle afin de fournir une plus grande striction de la section d'étranglement.

40. Appareil selon la revendication 39, dans lequel la torsion du second distributeur (18) est inverse à l'enroulement du premier distributeur afin d'empêcher qu'une des couches ne se détorde.

41. Appareil selon la revendication 39, dans lequel le second distributeur (18) peut être pivoté selon au moins 90° dans une partie pleine perpendiculaire à la direction de translation lors de la liaison de l'espace entre des balles successives, ou groupes de balles successifs, afin de rétrécir la taille dans la région de l'espace et faciliter l'étanchéité de l'extrémité.

42. Appareil selon la revendication 41, dans lequel le second distributeur (18) peut être pivoté selon un angle supérieur à 180°, moyennant quoi les extrémités peuvent être isolées uniquement par une action de torsion.
